# EUROPÄISCHE PATENTSCHRIFT

(11) **EP 2 640 970 B1**
(45) Veröffentlichungstag und Bekanntmachung des Hinweises auf die Patenterteilung: **15.10.2014**
(21) Anmeldenummer: 11785650.0
(22) Anmeldetag: 15.11.2011
(51) Int. Cl.: F03D 9/00, F03D 11/00

(54) **WINDENERGIEANLAGE UND VERFAHREN ZUM BETREIBEN EINER WINDENERGIEANLAGE MIT TEMPERATURÜBERWACHUNG DES TRANSFORMATORS**
WIND TURBINE AND METHOD FOR OPERATING A WIND TURBINE WITH TEMPERATURE MONITORING OF THE TRANSFORMER
ÉOLIENNE ET PROCÉDÉ POUR FAIRE FONCTIONNER UNE ÉOLIENNE DOTÉE D'UN SYSTÈME DE SURVEILLANCE DE LA TEMPÉRATURE DU TRANSFORMATEUR

(30) Priorität: 17.11.2010 DE 102010051675
(43) Veröffentlichungstag der Anmeldung: 25.09.2013
(73) Patentinhaber: Senvion SE, 22297 Hamburg (DE)
(72) Erfinder: MATZEN, Björn, 24855 Bollingstedt (DE); NIETMANN, Lars, 25767 Albersdorf (DE); BÖTTGER, Jan, 23843 Bad Oldesloe (DE); SCHLURICKE, Sebastian, 24943 Flensburg (DE)
(74) Vertreter: Glawe, Delfs, Moll
(86) Internationale Anmeldenummer: PCT/EP2011/070153
(87) Internationale Veröffentlichungsnummer: WO 2012/065992

(56) Entgegenhaltungen:
- WO-A1-03/014629
- DE-A1-102008 034 531

## Beschreibung

Die Erfindung betrifft eine Windenergieanlage mit einem Generator zur Erzeugung elektrischer Energie und mit einem Transformator. Der Transformator empfängt auf einer Sekundärseite elektrische Energie von dem Generator und gibt diese auf einer Primärseite mit höherer Spannung wieder ab. Die Windenergieanlage umfasst ferner eine Temperaturüberwachung für den Transformator. Die Erfindung betrifft außerdem ein Verfahren zum Betreiben einer solchen Windenergieanlage.

Für die Temperaturüberwachung des Transformators ist üblicherweise die Steuerung der Windenergieanlage zuständig. Eine Information über die Temperatur des Transformators wird in der Steuerung verarbeitet. Überschreitet die Temperatur vorgegebene Grenzwerte, veranlasst die Steuerung geeignete Gegenmaßnahmen. Es kann beispielsweise eine Kühlung in Betrieb gesetzt werden oder der Transformator vom Netz getrennt werden. Diese Temperaturüberwachung ist davon abhängig, dass die Steuerung der Windenergieanlage in Betrieb ist.

Windenergieanlagen mit einer Temperaturüberwachüng für den Transformator sind beispielsweise bekannt aus der DE 10 2008 034 531 A1,

Der Erfindung liegt die Aufgabe zu Grunde, eine Windenergieanlage und ein Verfahren zum Betreiben einer Windenergieanlage vorzustellen, bei denen das Risiko eines Schadens im Transformator vermindert ist. Ausgehend vom eingangs genannten Stand der Technik wird die Aufgabe gelöst durch die Merkmale der unabhängigen Ansprüche. Vorteilhafte Ausführungsformen finden sich in den Unteransprüchen. Bei der Windenergieanlage ist erfindungsgemäß vorgesehen, dass die Spannungsversorgung der Temperaturüberwachung von der Primärseite des Transformators gespeist ist.

Die Erfindung hat erkannt, dass es beim Betrieb einer Windenergieanläge Phasen gibt, in denen die Steuerung der Windenergieanlage nicht in Betrieb ist, in denen aber die Primärseite des Transformators trotzdem, ohne nennenswerte Leistung in das Netz zu übertragen, mit dem Netz verbunden ist. Insbesondere tritt dieser Zustand regelmäßig vor der ersten Inbetriebnahme einer Windenergieanlage ein. Der Transformator ist auf der Primärseite bereits an das Mittelspannungsnetz angeschlossen, während die Windenergieanlage noch nicht in Betrieb ist. Die gesamte Leerlaufleistung des Transformators wird dann in Wärme umgesetzt. Es besteht die Gefahr einer Überhitzung, da keine Schutzmaßnahmen durch die Steuerung eingeleitet werden können. Der Transformator kann innerhalb weniger Stunden zerstört werden.

Bei der erfindungsgemäßen Windenergieanlage ist die Temperaturüberwachung unabhängig von der Steuerung der Windenergieanlage und verfügt über eine eigene, fest mit dem Transformator verbundene Energieversorgung. Sobald der Transformator auf der Primärseite mit dem Netz verbunden ist, steht auch die Spannungsversorgung für die Temperaturüberwachung zur Verfügung. Es ist sichergestellt, dass die Temperatur des Transformators sich nicht unbemerkt erhöhen kann und der Transformator dadurch Schaden erleidet.

Auf der Primärseite des Transformators ist die Spannung regelmäßig größer als 10 kV und liegt beispielsweise in der Größenordnung zwischen 10 kV und 33 kV. Die Betriebsspannung der Temperaturüberwachung ist wesentlich niedriger, beispielsweise in der Größenordnung von 100 V. Vorzugsweise ist ein Spannungswandler vorgesehen, mit dem die auf der Primärseite des Transformators anliegende Spannung auf eine für die Temperaturüberwachung geeignete Hilfs-Betriebsspannung umgewandelt wird. Die Hilfs-Betriebsspannung ist vorzugsweise kleiner als 500 V, weiter vorzugsweise kleiner als 200 V. Die Hilfs-Betriebsspannung ist in vielen Fällen eine andere Spannung als die Spannung auf der Sekundärseite des Transformators.

Temperatursensoren sind regelmäßig so gestaltet, dass sie einen elektrischen Widerstand aufweisen, dessen Wert sich in Abhängigkeit von der gemessenen Temperatur ändert. Der Temperatursensor ist vorzugsweise ein Kaltleiter (PTC-Thermistor), bei dem der elektrische Widerstand mit der Temperatur ansteigt. Normalerweise besteht ein kontinuierlicher Zusammenhang zwischen der Temperatur und dem elektrischen Widerstand. Um eine Überschreitung eines vorgegebenen Temperaturgrenzwerts feststellen zu können, kann der Kaltleiter mit einem Kaltleiterauslösegerät kombiniert sein. Wenn der elektrische Widerstand des Kaltleiters einen vorgegebenen Grenzwert überschreitet, gibt das Kaltleiterauslösegerät ein Signal und es können Gegenmaßnahmen ausgelöst werden.

Wenn der Transformator einen Leistungsschalter aufweist, mit dem die Primärseite des Transformators vom Netz getrennt werden kann, kann die Gegenmaßnahme darin bestehen, den Leistungsschalter zu öffnen. Vorzugsweise ist für den Leistungsschalter ein Energiespeicher vorgesehen, mit dem der Leistungsschalter geöffnet werden kann, ohne dass zusätzliche Energie von außen zugeführt werden muss. Der Spannungswandler kann dazu ausgelegt sein, auch diesen Energiespeicher aufzuladen.

Alternativ oder zusätzlich kann die Gegenmaßnahme auch darin bestehen, eine Kühlung für den Transformator in Gang zu setzen. Der Spannungswandler kann dazu ausgelegt sein, auch die Kühlung mit elektrischer Energie zu versorgen. In einer vorteilhaften Ausführungsform wird bei Überschreiten eines ersten Temperaturgrenzwerts eine Kühlung in Gang gesetzt und bei Überschreiten eines zweiten, höheren Temperaturgrenzwerts der Leistungsschalter geöffnet.

Die Temperatur wird vorzugsweise in einem Bereich des Transformators gemessen, in dem die Spannung niedriger ist als auf der Primärseite des Transformators. Je niedriger die Spannung ist, desto größer ist die Stromstärke und desto größer ist der Wärmeeintrag in den Transformator. Die Temperaturmessung kann beispielsweise auf der Sekundärseite des Transformators stattfindet. Wenn der Transformator im Leerlauf betrieben wird, steigt die Temperatur eher im Kern des Transformators als in den Wicklungen an. Die Temperaturmessung bezieht sich deswegen vorzugsweise auf den Kern des Transformators. Der Temperaturgrenzwert, bei dem der Transformator vom Netz getrennt werden muss, kann beispielsweise bei 150°C liegen.

Der für die Spannungsversorgung der Temperaturüberwachung zuständige Spannungswandler kann außerdem verwendet werden, um andere Funktionen auf der Primärseite des Transformators mit Spannung zu versorgen. Diese Funktionen können beispielsweise eine Spannungsmessung oder eine Leistungsmessung auf der Primärseite des Transformators sein.

Außer der erfindungsgemäßen ersten Temperaturüberwachung, die von der Primärseite des Transformators mit Spannung versorgt wird, kann eine zweite Temperaturüberwachung vorgesehen sein, die von der Primärseite des Transformators unabhängig ist. Die zweite Temperaturüberwachung kann beispielsweise an die Steuerung der Windenergieanlage angeschlossen sein.

Im normalen Betrieb der Windenergieanlage können die erste Temperaturüberwachung und die zweite Temperaturüberwachung parallel zueinander aktiv sein. Der ersten Temperaturüberwachung ist vorzugsweise ein höherer Temperaturgrenzwert zugeordnet als der zweiten Temperaturüberwachung. Über die Steuerung der Windenergieanlage können geeignete Maßnahmen zur Kühlung des Transformators ergriffen werden, wenn der niedrigere Temperaturgrenzwert der zweiten Temperaturüberwachung überschritten ist. Solche Maßnahmen können beispielsweise das Einschalten einer Kühlung oder Verminderung der abgegebenen Leistung sein. Der höhere Temperaturgrenzwert der ersten Temperaturüberwachung wird nur überschritten, wenn diese Maßnahmen nicht greifen. Dies gibt zusätzliche Sicherheit gegen ein Überhitzen des Transformators.

Die Erfindung betrifft außerdem ein Verfahren zum Betreiben einer solchen Windenergieanlage. Bei dem Verfahren wird die Spannung auf der Primärseite des Transformators abgegriffen und auf eine niedrigere Hilfs-Betriebsspannung umgewandelt. Der Transformator ist der Haupt-Transformator der Windenergieanlage, der auf der Sekundärseite elektrische Energie von dem Generator empfängt und diese auf der Primärseite mit höherer Spannung wieder abgibt. Mit der auf der Primärseite abgegriffenen Hilfs-Betriebsspannung wird eine Temperaturüberwachung des Transformators betrieben. Die Hilfs-Betriebsspannung kann eine andere Spannung sein als die auf der Sekundärseite des Transformators anliegende Spannung. Wird eine Überschreitung eines Temperaturgrenzwerts festgestellt, kann eine Gegenmaßnahme ergriffen werden, um einen weiteren Temperaturanstieg zu vermeiden. Die Gegenmaßnahme kann beispielsweise darin bestehen, den Transformator auf der Primärseite vom Netz zu trennen. Die Temperaturmessung für die Temperaturüberwachung wird vorzugsweise auf der Sekundärseite des Transformators durchgeführt. Das Verfahren kann mit weiteren Merkmalen kombiniert werden, die oben mit Bezug auf die erfindungsgemäße Windenergieanlage beschrieben sind.

Die Erfindung wird nachfolgend unter Bezugnahme auf die beigefügten Zeichnungen anhand einer vorteilhaften Ausführungsform beispielhaft beschrieben. Es zeigen:
- Fig. 1:: eine schematische Darstellung einer Windenergieanlage;
- Fig. 2:: eine vergrößerte Darstellung von Komponenten der Windenergieanlage aus Fig. 1;
- Fig. 3:: eine vergrößerte Darstellung des Transformators aus Fig. 2; und
- Fig. 4:: die Ansicht gemäß Fig. 3 bei einer anderen Ausführungsform der Erfindung.

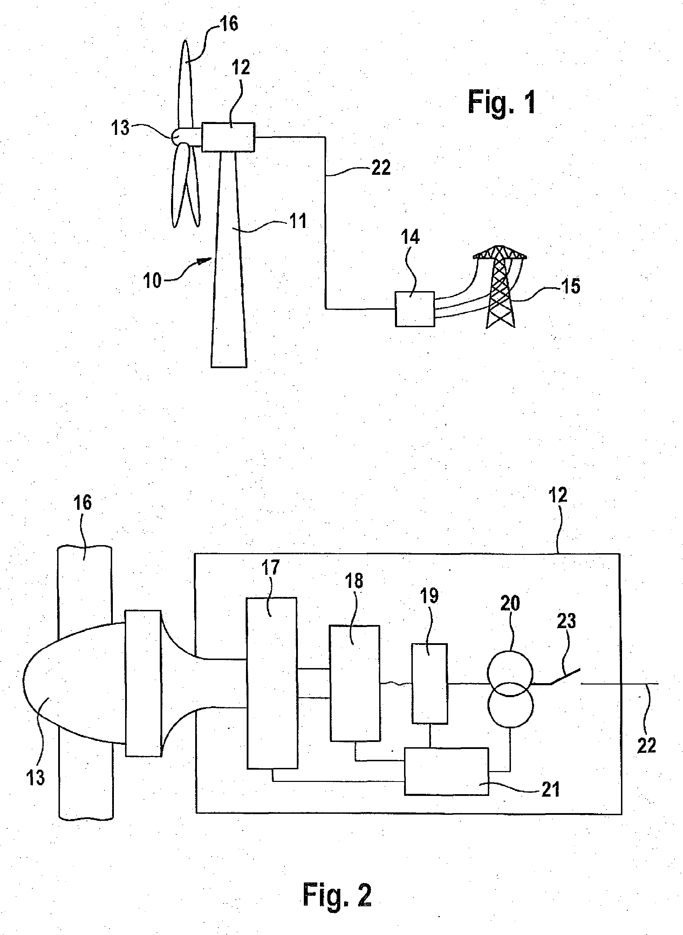

Eine Windenergieanlage 10 in Fig. 1 umfasst ein auf einem Turm 11 angeordnetes Maschinenhaus 12. In dem Maschinenhaus 12 ist ein drei Rotorblätter 16 aufweisender Rotor 13 gelagert, der über ein in Fig. 2 gezeigtes Getriebe 17 mit einem Generator 18 verbunden ist. Über einen Umrichter 19 und einen Transformator 20 wird die von dem Generator erzeugte elektrische Energie an ein Mittelspannungsnetz 22 abgegeben. Über das Mittelspannungsnetz 21 gelangt die elektrische Energie zu einer Übergabestelle 14 und wird dort an ein Stromverteilungsnetz 15 übergeben. Die Windenergieanlage 10 ist üblicherweise mit mehreren weiteren Windenergieanlagen zu einem Windpark zusammengeschlossen, wobei die elektrische Energie von den Windenergieanlagen bei der Übergabestelle 14 zusammengeführt wird. Eine Steuerung 21 steuert das Zusammenspiel der Komponenten der Windenergieanlage.

Von dem Umrichter 19 wird die elektrische Energie mit einer Spannung von beispielsweise 660 V zur Sekundärseite des Transformators 20 geleitet. In dem Transformator 20 findet eine Umwandlung auf eine höhere Spannung von beispielsweise 30 kV statt. Mit dieser Spannung wird die elektrische Energie von der Primärseite des Transformators 20 an das Mittelspannungsnetz 22 übergeben. Auf der Primärseite des Transformators 20 ist ein Leistungsschalter 23 angeordnet, mit dem der Stromfluss unterbrochen werden kann. Wenn die Windenergieanlage in Betrieb ist und elektrische Energie in das Netz einspeist, sind beide Schalter 23, 24 geschlossen.

Es kann der Zustand eintreten, dass der Schalter 23 geschlossen ist und damit eine Verbindung von dem Mittelspannungsnetz 22 zum Transformator 20 besteht, während über den Transformator keine oder nur geringe Leistung übertragen wird. Der Transformator 20 läuft dann im Leerlauf, was mit einer Verlustleistung von ungefähr 10 kW verbunden ist. Diese Verlustleistung wird in Wärme umgewandelt und führt dazu, dass der Transformator 20 sich erwärmt. Wenn der Schalter 24 geöffnet ist, ist häufig auch die Windenergieanlage 10 insgesamt außer Betrieb. Regelmäßig tritt dieser Zustand beispielsweise vor der ersten Inbetriebnahme der Windenergieanlage 10 ein. Wenn die Windenergieanlage 10 außer Betrieb ist, unterliegt der Transformator 20 keinerlei Kontrolle durch die Steuerung 21.

Mit der Erfindung wird eine Temperaturüberwachung für den Transformator 20 vorgestellt, mit der verhindert wird, dass der Transformator 20 in diesem Betriebszustand überhitzt.

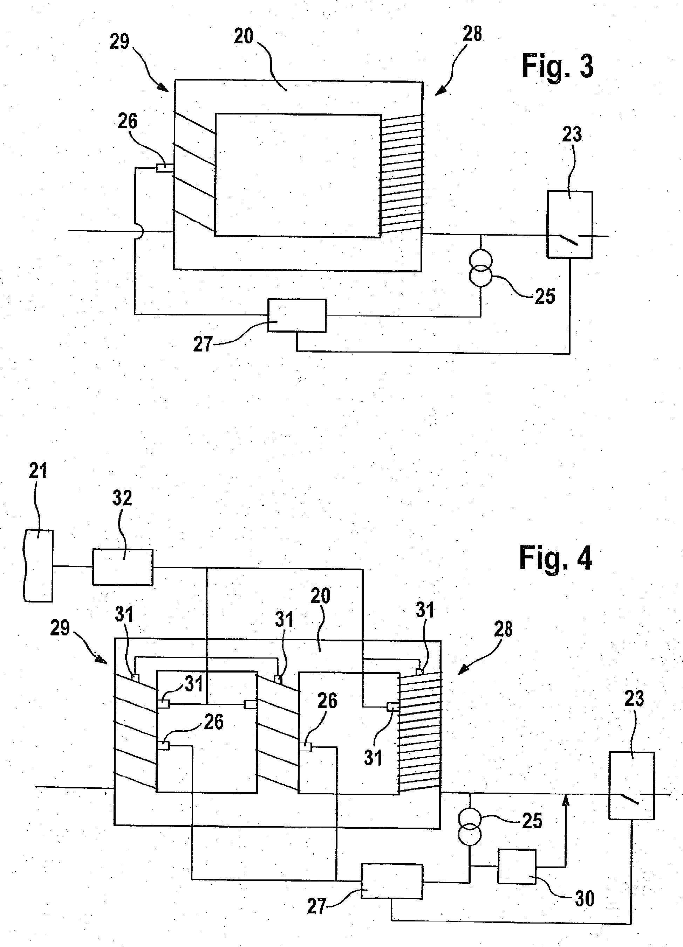

Gemäß Fig. 3 ist auf der Primärseite 28 des Transformators 20 ein Spannungswandler 25 angeordnet. Der Spannungswandler 25 wandelt die Mittelspannung von 30 kV auf eine Hilfs-Betriebsspannung von beispielsweise 230 V um. Mit dieser Hilfs-Betriebsspannung wird die Temperaturüberwachung des Transformators 20 betrieben. Die Temperaturüberwachung umfasst einen Temperatursensor 26 in Form eines Kaltleiters und ein Kaltleiterauslösegerät 27. Der Temperatursensor 26 misst auf der Sekundärseite 29 die Temperatur des Kerns des Transformators 20, weil dort die Gefahr einer Überhitzung im Leerlauf des Transformators 20 am größten ist. Der Kaltleiter umfasst einen elektrischen Widerstand, dessen Wert sich in Abhängigkeit von der gemessenen Temperatur ändert. Je höher die Temperatur, desto größer der elektrische Widerstand des Kaltleiters.

Mit dem Kaltleiterauslösegerät 27 wird der elektrische Widerstand des Kaltleiters überwacht. Wenn der elektrische Widerstand einen vorgegebenen Grenzwert überschreitet, gibt das Kaltleiterauslösegerät 27 ein Signal an den Leistungsschalter 23, so dass der Leistungsschalter 23 geöffnet wird. Gegebenenfalls kann ein Energiespeicher vorgesehen sein, aus dem die Betätigung des Leistungsschalters 23 gespeist wird. Der vorgegebene Grenzwert kann beispielsweise so gewählt sein, dass er bei einer Temperatur von 150°C im Kern des Transformators 20 überschritten wird. Nachdem der Leistungsschalter 23 geöffnet wurde, wird dem Transformator 20 keine weitere Energie mehr zugeführt und es besteht kein Risiko einer weiteren Erwärmung. Alternativ oder zusätzlich zum Öffnen des Leistungsschalters 23 kann auch eine Kühlung für den Transformator 20 in Gang gesetzt werden.

Bei einer alternativen Ausführungsform, die in Fig. 4 gezeigt ist, umfasst der Transformator 20 außer den 660 V auf der Sekundärseite 29 und den 30 kV auf der Primärseite 28 eine dritte Spannungsstufe von 950 V oder 6600 V. Mit dem Spannungswandler 25 wird wiederum die Mittelspannung auf der Primärseite 28 des Transformators 20 abgegriffen und auf eine Hilfs-Betriebsspannung von 100 V umgewandelt. Mit der Hilfs-Betriebsspannung wird eine Temperaturüberwachung betrieben, die ein Kaltleiterauslösegerät 27 sowie zwei Temperatursensoren 26 umfasst. Die Temperatursensoren 26 messen die Temperatur des Kerns des Transformators 20. Einer der Temperatursensoren ist auf der 660 V-Stufe, der andere Temperatursensor auf der 950 V-Stufe angeordnet. Überschreitet in einem der Temperatursensoren 26 der elektrische Widerstand einen vorgegebenen Grenzwert, löst das Kaltleiterauslösegerät 27 aus und der Leistungsschalter 23 wird geöffnet.

Mit der Hilfs-Betriebsspannung kann außerdem eine Messeinrichtung 30 betrieben werden. Die Messeinrichtung 30 ist dazu ausgelegt, auf der Primärseite 28 des Transformators 20 Spannungs- und Leistungsmessungen durchzuführen.

An dem Transformator 20 ist zudem eine Mehrzahl von weiteren Temperatursensoren 31 angeordnet, die über ein Kaltleiterauslösegerät 32 an die Steuerung 21 der Windenergieanlage 10 angeschlossen sind. Über diese Temperatursensoren 31 wird die Temperatur des Transformators 20 während des normalen Betriebs der Winderiergieanlage überwacht. Die Temperatursensoren 31 messen sowohl die Temperatur im Kern des Transformators 20 als auch in den Wicklungen.

Im normalen Betrieb der Windenergieanlage 10 kann die Temperaturüberwachung mit den Temperatursensoren 31 und dem Kaltleiterauslösegerät 32 parallel zu der Temperaturüberwachung mit den Temperatursensoren 26 und dem Kaltleiterauslösegerät 27 in Betrieb sein. In der Steuerung 21 der Windenergieanlage 10 werden die Temperatursignale von den Temperatursensoren 31 verarbeitet. Überschreitet eine der Temperaturen einen vorgegebenen Grenzwert, ergreift die Steuerung 21 geeignete Maßnahmen, um die Temperatur in dem Transformator 20 wieder zu senken. In erster Linie wird die Steuerung 21 aktive Maßnahmen der Kühlung einleiten und beispielsweise eine Lüftung einschalten. Reicht dies nicht aus, kann die Leistungsabgabe der Windenergieanlage 10 angepasst werden. Als letzte Maßnahme, die beispielsweise durch das Kaltleiterauslösegerät 32 ausgelöst werden kann, wird die Windenergieanlage 10 abgeschaltet. Die Temperaturgrenzwerte, ab denen diese Gegenmaßnahmen in der Steuerung 21 ergriffen werden, liegen niedriger als der Temperaturgrenzwert, bei dem das Kaltleiterauslösegerät 27 auslöst und der Leistungsschalter 23 geöffnet wird. Die Temperaturüberwachung mit dem Temperatursensor 26 und dem Kaltleiterauslösegerät 27 gibt damit eine zweite Sicherheit für den Fall, dass die Temperatur in dem Transformator 20 trotz der Gegenmaßnahmen der Steuerung 21 weiter ansteigt.

## Patentansprüche

1. Windenergieanlage mit einem Generator (19) zum Erzeugen elektrischer Energie, mit einem Transformator (20), der dazu ausgelegt ist, auf einer Sekundärseite (29) elektrische Energie von dem Generator (19) zu empfangen und diese auf einer Primärseite (28) mit höherer Spannung wieder abzugeben, und mit einer Temperaturüberwachung (26, 27) für den Transformator (20), **dadurch gekennzeichnet, dass** die Spannungsversorgung der Temperaturüberwachung von der Primärseite (28) des Transformators (20) gespeist ist.

2. Windenergieanlage nach Anspruch 1, **dadurch gekennzeichnet, dass** ein Spannungswandler (25) vorgesehen ist, mit dem die auf der Primärseite (28) des Transformators (20) anliegende Spannung auf eine für die Temperaturüberwachung (26, 27) geeignete Hilfs-Betriebsspannung umgewandelt wird.

3. Windenergieanlage nach Anspruch 1 oder 2, **dadurch gekennzeichnet, dass** die Temperaturüberwachung (26, 27) einen Kaltleiter (26) und ein Kaltleiterauslösegerät (27) umfasst.

4. Windenergieanlage nach einem der Ansprüche 1 bis 3, **dadurch gekennzeichnet, dass** die Temperaturüberwachung (26, 27) dazu ausgelegt ist, bei Überschreiten eines vorgegebenen Temperaturgrenzwerts die Primärseite (28) des Transformators (20) vom Netz (22) zu trennen.

5. Windenergieanlage nach einem der Ansprüche 1 bis 4, **dadurch gekennzeichnet, dass** die Temperaturüberwachung (26, 27) dazu ausgelegt ist, bei Überschreiten eines vorgegebenen Temperaturgrenzwerts einen Kühler für den Transformator (20) in Betrieb zu setzen.

6. Windenergieanlage nach einem der Ansprüche 1 bis 5, **dadurch gekennzeichnet, dass** der Temperatursensor (26) der Temperaturüberwachung (26, 27) in einem Bereich des Transformators (20) angeordnet ist, in dem die Spannung niedriger ist als auf der Primärseite (28) des Transformators (20).

7. Windenergieanlage nach einem der Ansprüche 1 bis 6, **dadurch gekennzeichnet, dass** der Temperatursensor (26) der Temperaturüberwachung (26, 27) am Kern des Transformators (20) angeordnet ist.

8. Windenergieanlage nach einem der Ansprüche 1 bis 7, dadurch gekenntzeichnet, dass eine Messeinrichtung (30) für die Spannung auf der Primärseite (28) des Transformators (20) vorgesehen ist und dass die Spannungsversorgung der Messeinrichtung (30) von der Primärseite (28) des Transformators (20) gespeist ist.

9. Windenergieanlage nach einem der Ansprüche 1 bis 8, **dadurch gekennzeichnet, dass** eine zweite Temperaturüberwachung (31, 32) vorgesehen ist und dass die zweite Temperaturüberwachung (31, 32) an die Steuerung (21) der Windenergieanlage angeschlossen ist.

10. Windenergieanlage nach Anspruch 8, **dadurch gekennzeichnet, dass** die erste Temperaturüberwachung (26, 27) und die zweite Temperaturüberwachung (31, 32) parallel aktiv sind, wenn die Windenergieanlage (10) in Betrieb ist.

11. Windenergieanlage nach Anspruch 10, **dadurch gekennzeichnet, dass** der ersten Temperaturüberwachung (26, 27) ein höherer Temperaturgrenzwert zugeordnet ist als der zweiten Temperaturüberwachung (31, 32).

12. Verfahren zum Betreiben einer Windenergieanlage (10), die einen Generator (19) zum Erzeugen elektrischer Energie und einen Transformator (20) aufweist, wobei der Transformator (20) dazu ausgelegt ist, auf einer Sekundärseite (29) elektrische Energie von dem Generator (19) zu empfangen und diese auf einer Primärseite (28) mit höherer Spannung wieder abzugeben, mit folgenden Schritten:
a. Abgreifen der Spannung auf der Primärseite (28) des Transformators (20);
b. Umwandeln der Spannung auf der Primärseite in eine niedrigere Hilfs-Betriebsspannung;
c. Betreiben einer Temperaturüberwachung (26, 27) für den Transformator (20) mit der Hilfs-Betriebsspannung.

## Claims

1. Wind turbine having a generator (19) for generating electrical energy, having a transformer (20) which is configured to receive, on a secondary side (29), electrical energy from the generator (19) and to output said electrical energy again at a higher voltage on a primary side (28), and having a temperature-monitoring means (26, 27) for the transformer (20), **characterized in that** the voltage supply for the temperature-monitoring means is fed from the primary side (28) of the transformer (20).

2. Wind turbine according to Claim 1, **characterized in that** a voltage converter (25) is provided, by means of which the voltage present at the primary side (28) of the transformer (20) is converted to an auxiliary operating voltage suitable for the temperature-monitoring means (26, 27).

3. Wind turbine according to Claim 1 or 2, **characterized in that** the temperature-monitoring means (26, 27) comprises a PTC thermistor (26) and a PTC thermistor-control unit (27).

4. Wind turbine according to any of Claims 1 to 3, **characterized in that** the temperature-monitoring means (26, 27) is configured to isolate the primary side (28) of the transformer (20) from the mains (22) in the event of a predefined temperature limit value being exceeded.

5. Wind turbine according to any of Claims 1 to 4, **characterized in that** the temperature-monitoring means (26, 27) is configured to start up a cooler for the transformer (20) in the event of a predefined temperature limit value being exceeded.

6. Wind turbine according to any of Claims 1 to 5, **characterized in that** the temperature sensor (26) of the temperature-monitoring means (26, 27) is arranged in a region of the transformer (20) in which the voltage is lower than on the primary side (28) of the transformer (20).

7. Wind turbine according to any of Claims 1 to 6, **characterized in that** the temperature sensor (26) of the temperature-monitoring means (26, 27) is arranged on the core of the transformer (20).

8. Wind turbine according to any of Claims 1 to 7, **characterized in that** a measuring device (30) for the voltage on the primary side (28) of the transformer (20) is provided and **in that** the voltage supply of the measuring device (30) is fed from the primary side (28) of the transformer (20).

9. Wind turbine according to any of Claims 1 to 8, **characterized in that** a second temperature-monitoring means (31, 32) is provided and **in that** the second temperature-monitoring means (31, 32) is connected to the controller (21) of the wind turbine.

10. Wind turbine according to Claim 8, **characterized in that** the first temperature-monitoring means (26, 27) and the second temperature-monitoring means (31, 32) are active in parallel when the wind turbine (10) is in operation.

11. Wind turbine according to Claim 10, **characterized in that** the first temperature-monitoring means (26, 27) is assigned a higher temperature limit value than the second temperature-monitoring means (31, 32).

12. Method for operating a wind turbine (10), which has a generator (19) for generating electrical energy and a transformer (20), wherein the transformer (20) is configured to receive, on a secondary side (29), electrical energy from the generator (19) and to output said electrical energy again at a higher voltage on a primary side (28), said method having the following steps:
a. tapping the voltage on the primary side (28) of the transformer (20);
b. converting the voltage on the primary side into a lower auxiliary operating voltage;
c. operating a temperature-monitoring means (26, 27) for the transformer (20) using the auxiliary operating voltage.

## Revendications

1. Centrale éolienne comportant un générateur (19) destiné à produire de l'énergie électrique, comportant un transformateur (20), qui est configuré pour recevoir sur un côté secondaire (29) l'énergie électrique issue du générateur (19) et pour émettre à nouveau celle-ci avec une tension plus élevée sur un côté primaire (28), et comportant un contrôle de température (26, 27) pour le transformateur (20), **caractérisée en ce que** la tension destinée au contrôle de température est fournie depuis le côté primaire (28) du transformateur (20).

2. Centrale éolienne selon la revendication 1, **caractérisée en ce qu'**il est prévu un convertisseur de tension (25), par lequel la tension appliquée sur le côté primaire (28) du transformateur (20) est convertie en une tension de service de secours appropriée au contrôle de température (26, 27).

3. Centrale éolienne selon la revendication 1 ou 2, **caractérisée en ce que** le contrôle de température (26, 27) comporte une résistance CTP (26) et un dispositif de déclenchement à résistance CTP (27).

4. Centrale éolienne selon l'une quelconque des revendications 1 à 3, **caractérisée en ce que** le contrôle de température (26, 27) est configuré pour couper la liaison entre le côté primaire (28) du transformateur (20) et le réseau (22) chaque fois que la température est supérieure à une valeur limite prédéfinie pour la température.

5. Centrale éolienne selon l'une quelconque des revendications 1 à 4, **caractérisée en ce que** le contrôle de température (26, 27) est configuré pour mettre en service un refroidisseur pour le transformateur (20) chaque fois que la température est supérieure à une valeur limite prédéfinie pour la température.

6. Centrale éolienne selon l'une quelconque des revendications 1 à 5, **caractérisée en ce que** le capteur de température (26) du contrôle de température (26, 27) est disposé dans une zone du transformateur (20), dans laquelle la tension est plus basse que celle sur le côté primaire (28) du transformateur (20).

7. Centrale éolienne selon l'une quelconque des revendications 1 à 6, **caractérisée en ce que** le capteur de température (26) du contrôle de température (26, 27) est disposé sur le noyau du transformateur (20).

8. Centrale éolienne selon l'une quelconque des revendications 1 à 7, **caractérisée en ce qu'**il est prévu un dispositif de mesure (30) pour la tension sur le côté primaire (28) du transformateur (20), et **en ce que** la tension destinée au dispositif de mesure (30) est fournie depuis le côté primaire (28) du transformateur (20).

9. Centrale éolienne selon l'une quelconque des revendications 1 à 8, **caractérisée en ce qu'**il est prévu un deuxième contrôle de température (31, 32), et **en ce que** le deuxième contrôle de température (31, 32) est raccordé à la commande (21) de la centrale éolienne.

10. Centrale éolienne selon la revendication 8, **caractérisée en ce que** le premier contrôle de température (26, 27) et le deuxième contrôle de température (31, 32) sont actifs parallèlement, lorsque la centrale éolienne (10) est en service.

11. Centrale éolienne selon la revendication 10, **caractérisée en ce qu'**au premier contrôle de température (26, 27) est affectée une valeur limite de température supérieure à celle du deuxième contrôle de température (31, 32).

12. Procédé permettant de faire fonctionner une centrale éolienne (10) qui comporte un générateur (19) destiné à produire de l'énergie électrique et un transformateur (20), ledit transformateur (20) étant configuré pour recevoir sur un côté secondaire (29) l'énergie électrique issue du générateur (19) et pour émettre à nouveau celle-ci avec une tension plus élevée sur un côté primaire (28), comportant les étapes suivantes :
a. prélèvement de la tension sur le côté primaire (28) du transformateur (20) ;
b. conversion de la tension sur le côté primaire en une tension de service de secours plus basse ;
c. exploitation d'un contrôle de température (26, 27) pour le transformateur (20) avec la tension de service de secours.
